# EUROPEAN PATENT APPLICATION

(11) **EP 4 814 788 A1**
(43) Date of publication of application: **30.09.2026**
(21) Application number: 25192506.1
(22) Date of filing: 29.07.2025
(51) Int. Cl.: G06N 3/02, G06N 3/08, G06N 20/00, G06Q 10/20, G06F 40/58

(54) **INFORMATION PROCESSING SYSTEM, INFORMATION PROCESSING PROGRAM, AND INFORMATION PROCESSING METHOD**

(30) Priority: 26.03.2025 JP 2025052706
(71) Applicant: FUJIFILM Business Innovation Corp., Minato-ku Tokyo (JP)
(72) Inventor: MORI, Junichiro, Yokohama-shi, Kanagawa (JP); SAWAI, Kenji, Yokohama-shi, Kanagawa (JP); YOKOTA, Masaru, Yokohama-shi, Kanagawa (JP); MITSUHASHI, Tomoyuki, Yokohama-shi, Kanagawa (JP)
(74) Representative: Becker Kurig & Partner Patentanwälte mbB

(57) **Abstract**

An information processing system includes a processor configured to, in using an answer model trained based on first information obtained in a first region, acquire second information that indicates an inquiry related to a failure in a target apparatus and is obtained in a second region, acquire answer information output from the answer model by inputting the second information into the answer model, acquire converted answer information by converting information for the first region included in the answer information into information for the second region, and output the converted answer information.

## Description

### BACKGROUND OF THE INVENTION

### (i) Field of the Invention

The present disclosure relates to an information processing system, an information processing program, and an information processing method.

### (ii) Description of Related Art

JP2020-154662A discloses a maintenance work support apparatus including a first acquisition unit that acquires a dataset including a combination of apparatus information of a target apparatus and operation information of the target apparatus or a dataset including a combination of apparatus information of a target apparatus and event information indicating an event related to the target apparatus, a second acquisition unit that acquires work content information that is content of maintenance work performed on the target apparatus by a maintenance worker and in which a replaced or repaired component or a new component after replacement is recorded, and a learning unit that learns the dataset acquired by the first acquisition unit and the replaced or repaired component or the new component after replacement recorded in the work content information acquired by the second acquisition unit, in association with each other.

### SUMMARY OF THE INVENTION

An object of the present disclosure is to provide an information processing system, an information processing program, and an information processing method capable of, in using a model that outputs an answer to an inquiry related to a failure in a target apparatus, obtaining an answer to an inquiry received in a certain region even in a case where the model is trained based on information obtained in another region.

In order to achieve the above object, according to a first aspect of the present disclosure, there is provided an information processing system including a processor configured to, in using an answer model trained based on first information obtained in a first region, acquire second information that indicates an inquiry related to a failure in a target apparatus and is obtained in a second region, acquire answer information output from the answer model by inputting the second information into the answer model, acquire converted answer information by converting information for the first region included in the answer information into information for the second region, and output the converted answer information.

According to a second aspect of the present disclosure, in the information processing system according to the first aspect, the processor may be configured to convert the information for the first region included in the answer information into the information for the second region based on a language of the second information.

According to a third aspect of the present disclosure, in the information processing system according to the second aspect, the answer information may be measure information indicating a measure for the target apparatus with respect to the inquiry related to the failure in the target apparatus, and the processor may be configured to specify the second region based on the language of the second information, and convert the information for the first region included in the measure information output from the answer model into the information for the second region with reference to correspondence information in which the measure information in the first region and the measure information in the second region are associated with each other.

According to a fourth aspect of the present disclosure, in the information processing system according to the first aspect, the processor may be configured to convert the information for the first region included in the answer information into the information for the second region based on positional information of the target apparatus.

According to a fifth aspect of the present disclosure, in the information processing system according to the fourth aspect, the answer information may be measure information indicating a measure for the target apparatus with respect to the inquiry related to the failure in the target apparatus, and the processor may be configured to specify the second region based on the positional information of the target apparatus, and convert the information for the first region included in the measure information output from the answer model into the information for the second region with reference to correspondence information in which the measure information in the first region and the measure information in the second region are associated with each other.

According to a sixth aspect of the present disclosure, in the information processing system according to the fifth aspect, the measure information in the second region in the correspondence information may include constraint information related to the measure in the second region.

According to a seventh aspect of the present disclosure, in the information processing system according to the sixth aspect, the processor may be configured to output the answer information, the constraint information, and reason information indicating a reason for setting the constraint information.

According to an eighth aspect of the present disclosure, there is provided an information processing program causing a computer to execute a process including, in using an answer model trained based on first information obtained in a first region, acquiring second information that indicates an inquiry related to a failure in a target apparatus and is obtained in a second region, acquiring answer information output from the answer model by inputting the second information into the answer model, acquiring converted answer information by converting information for the first region included in the answer information into information for the second region, and outputting the converted answer information.
According to a ninth aspect of the present disclosure, there is provided an information processing method including, in using an answer model trained based on first information obtained in a first region, acquiring second information that indicates an inquiry related to a failure in a target apparatus and is obtained in a second region, acquiring answer information output from the answer model by inputting the second information into the answer model, acquiring converted answer information by converting information for the first region included in the answer information into information for the second region, and outputting the converted answer information.

According to the first aspect, the eighth aspect, or the ninth aspect of the present disclosure, in using the model that outputs the answer to the inquiry related to the failure in the target apparatus, an answer to an inquiry received in a certain region can be obtained even in a case where the model is trained based on information obtained in another region.

According to the second aspect of the present disclosure, which region is the second region can be specified based on the language of the second information, and the answer information for the second region can be obtained based on a result of specifying the second region.

According to the third aspect of the present disclosure, which region is the second region can be specified based on the language of the second information, and the answer information for the second region can be obtained based on the result of specifying the second region and on the correspondence information prepared in advance.

According to the fourth aspect of the present disclosure, which region is the second region can be specified based on the positional information of the target apparatus, and the answer information for the second region can be obtained based on the result of specifying the second region.

According to the fifth aspect of the present disclosure, which region is the second region can be specified based on the positional information of the target apparatus, and the answer information for the second region can be obtained based on the result of specifying the second region and on the correspondence information prepared in advance.

According to the sixth aspect of the present disclosure, the answer information including a constraint related to the measure in the second region can be obtained.

According to the seventh aspect of the present disclosure, the constraint related to the measure in the second region and a reason for the constraint are obtained. Accordingly, a user of the system can check a reason for switching the measure.

### BRIEF DESCRIPTION OF THE DRAWINGS

Exemplary embodiment(s) of the present invention will be described in detail based on the following figures, wherein:
FIG. 1 is a diagram illustrating a schematic configuration of an answer system 10 according to an exemplary embodiment;
FIG. 2 is a diagram for describing the exemplary embodiment;
FIG. 3 is a block diagram illustrating an example of hardware configurations of an information processing apparatus, a user terminal, and an operator terminal according to the exemplary embodiment;
FIG. 4 is a block diagram illustrating a functional configuration example of the information processing apparatus;
FIG. 5 is a diagram illustrating an example of correspondence information;
FIG. 6 is a diagram for describing constraint information;
FIG. 7 is a diagram for describing the constraint information for each user;
FIG. 8 is a screen example including converted answer information, the constraint information, and reason information; and
FIG. 9 is a flowchart illustrating an example of a flow of information processing in the information processing apparatus according to the exemplary embodiment.

### DETAILED DESCRIPTION OF THE INVENTION

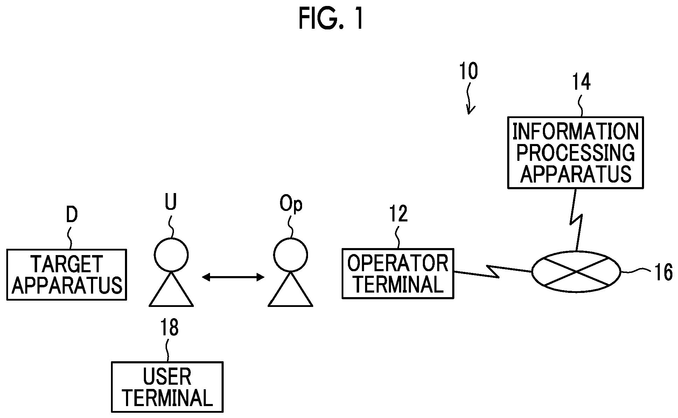

Hereinafter, an example of the present exemplary embodiment will be described in detail with reference to the drawings. In the present exemplary embodiment, an answer system in which a terminal, an information processing apparatus, and the like are connected to each other via a communication line such as various networks will be described as an example. FIG. 1 is a diagram illustrating a schematic configuration of an answer system 10 according to the present exemplary embodiment.

As illustrated in FIG. 1, the present exemplary embodiment assumes a scene where an operator Op receives an inquiry related to a failure in a target apparatus D from a user U who uses the target apparatus D. In such a scene, for example, conversation information between the user U and the operator Op is acquired through a telephone conversation between the user U and the operator Op.

The operator Op transmits the conversation information to an information processing apparatus 14 by operating an operator terminal 12. The information processing apparatus 14 inputs the conversation information into an answer model. Answer information for the failure in the target apparatus D included in the conversation information is output from the answer model.

The answer model is a well-known machine learning model and is trained in advance using a well-known machine learning algorithm and artificial intelligence technology. The answer model is trained based on learning information prepared in advance. The learning information is information in which information related to the failure in the target apparatus and information about a countermeasure for the failure are associated with each other. For example, the learning information is information in which information about the failure in the past in the target apparatus and information about the countermeasure for the failure are associated with each other.

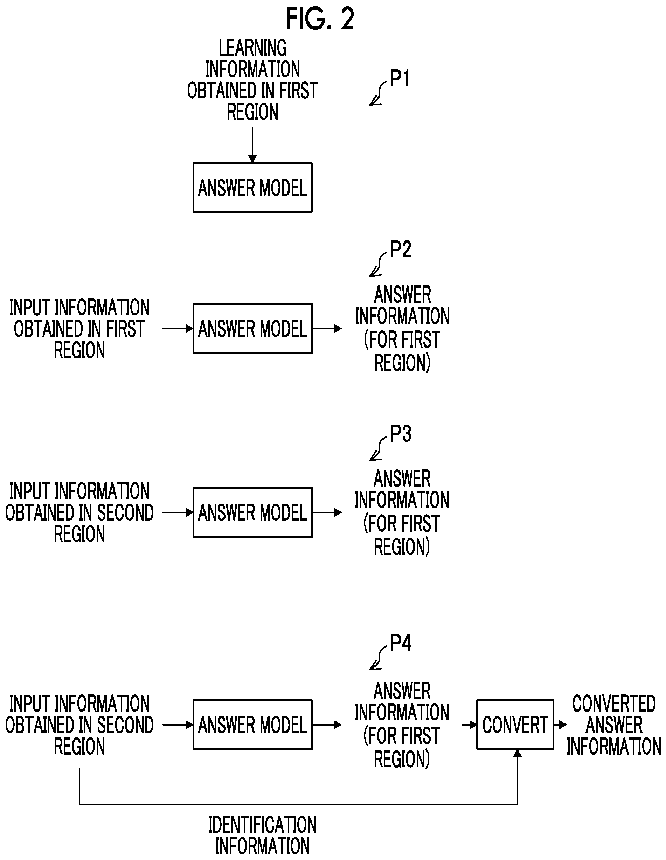

FIG. 2 is a diagram for describing the present exemplary embodiment. As illustrated in P1 of FIG. 2, the answer model of the present exemplary embodiment is trained in advance using the learning information obtained in a first region.

As illustrated in P2 of FIG. 2, in a case where input information obtained in the first region is input into the answer model, the answer model outputs the answer information for the first region. Meanwhile, as illustrated in P3 of FIG. 2, even in a case where input information obtained in a second region is input into the answer model, the answer model outputs the answer information for the first region.

Specifications of the target apparatus provided in the first region are assumed to be different from specifications of the target apparatus provided in the second region. In such a circumstance, for example, a case where the answer information output from the answer model includes a replacement target component number of the target apparatus D is considered. In such a case, the component number of the target apparatus provided in the first region is assumed to be output from the answer model even in a case where the input information obtained in the second region is input into the answer model, which is not appropriate.

Therefore, in the present exemplary embodiment, as illustrated in P4 of FIG. 2, the answer information for the first region output from the answer model is converted into answer information for the second region. For example, in the present exemplary embodiment, as illustrated in P4 of FIG. 2, identification information of a region is extracted from the input information obtained in the second region, and the answer information for the first region is converted into the answer information for the second region in accordance with the identification information of the region. Accordingly, even in a case where the answer model is trained based on the learning information obtained in the first region, an answer to an inquiry received in the second region may be obtained.

As illustrated in FIG. 1, the answer system 10 according to the present exemplary embodiment includes the operator terminal 12, the information processing apparatus 14, and the like. The operator terminal 12 and the information processing apparatus 14 are connected to each other via a communication line 16 such as a local area network (LAN), a wide area network (WAN), the Internet, or an intranet. Each of the operator terminal 12 and the information processing apparatus 14 can transmit and receive various types of data to and from each other via the communication line 16. The information processing apparatus 14 acquires the answer information output from the answer model by inputting the conversation information transmitted from the operator terminal 12 into the answer model, and outputs the answer information to the operator terminal 12. The answer system 10 may further include a user terminal 18 illustrated in FIG. 1. In this case, the user terminal 18 can communicate with the operator terminal 12, the information processing apparatus 14, and the like and, for example, transmit and receive various types of data to and from each other via the communication line 16.

While the number of each of the operator terminal 12, the information processing apparatus 14, and the user terminal 18 illustrated in FIG. 1 is one, the number of each of the operator terminal 12, the information processing apparatus 14, and the user terminal 18 may be plural, or the number of some of the operator terminal 12, the information processing apparatus 14, and the user terminal 18 may be plural.

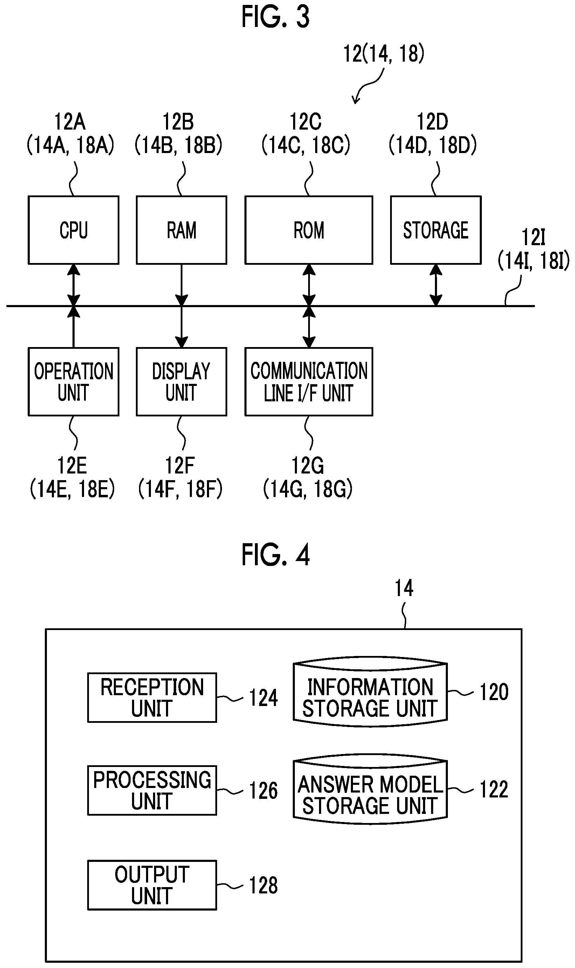

Basic configurations of electrical systems of the operator terminal 12, the information processing apparatus 14, and the user terminal 18 according to the present exemplary embodiment will be described. FIG. 3 is a block diagram illustrating the basic configurations of the electrical systems of the operator terminal 12, the information processing apparatus 14, and the user terminal 18 in the answer system 10 according to the present exemplary embodiment. The operator terminal 12, the information processing apparatus 14, and the user terminal 18 have general computer configurations. Thus, the information processing apparatus 14 will be representatively described below.

As illustrated in FIG. 3, the information processing apparatus 14 according to the present exemplary embodiment includes a CPU 14A as an example of a processor, a ROM 14B, a RAM 14C, a storage 14D, an operation unit 14E, a display unit 14F, and a communication line interface (I/F) unit 14G. The CPU 14A controls an operation of the whole information processing apparatus 14. The ROM 14B stores various control programs, various parameters, and the like in advance. The RAM 14C is used as a work area or the like when the CPU 14A executes various programs. The storage 14D stores various types of data, application programs, and the like. The operation unit 14E is used to input various types of information. The display unit 14F is used to display various types of information. The communication line I/F unit 14G is connected to the communication line 16 and transmits and receives various types of data to and from other apparatuses connected to the communication line 16. The communication line I/F unit 14G may be configured to directly communicate with each apparatus using various well-known types of wireless communication. The above units of the information processing apparatus 14 are electrically connected to each other by a system bus 14I. While the storage 14D is applied as a storage unit in the information processing apparatus 14 according to the present exemplary embodiment, a non-volatile storage unit such as a hard disk drive (HDD) or a flash memory is applied as an example of the storage.

With the above configuration, the information processing apparatus 14 according to the present exemplary embodiment executes, via the CPU 14A, each of access to the ROM 14B, the RAM 14C, and the storage 14D, acquisition of various types of data via the operation unit 14E, and display of various types of information on the display unit 14F. The information processing apparatus 14 executes, via the CPU 14A, a control of transmission and reception of communication data via the communication line I/F unit 14G.

Similarly, the operator terminal 12 according to the present exemplary embodiment executes, via a CPU 12A, each of access to a ROM 12B, a RAM 12C, and a storage 12D, acquisition of various types of data via an operation unit 12E, and display of various types of information on a display unit 12F. The operator terminal 12 executes, via the CPU 12A, a control of transmission and reception of communication data via a communication line I/F unit 12G.

Similarly, the user terminal 18 according to the present exemplary embodiment executes, via a CPU 18A, each of access to a ROM 18B, a RAM 18C, and a storage 18D, acquisition of various types of data via an operation unit 18E, and display of various types of information on a display unit 18F. The user terminal 18 executes, via the CPU 18A, a control of transmission and reception of communication data via a communication line I/F unit 18G.

Next, a functional configuration of the information processing apparatus 14 will be described. FIG. 4 is a block diagram illustrating an example of the functional configuration of the information processing apparatus 14. The information processing apparatus 14 is an example of an information processing system of the present disclosure.

Functionally, as illustrated in FIG. 4, the information processing apparatus 14 is configured to include an information storage unit 120, an answer model storage unit 122, a reception unit 124, a processing unit 126, and an output unit 128.

The information storage unit 120 stores various types of information necessary for executing each type of processing described later. For example, information related to each of a plurality of target apparatuses is stored.

The answer model storage unit 122 stores the answer model that provides an answer to input information. The answer model has a diagnostic function related to the failure in the target apparatus and is trained in advance based on first information obtained in the first region.

The reception unit 124 acquires second information that indicates the inquiry related to the failure in the target apparatus D and is obtained in the second region. For example, the second information is information created by the operator Op in the second region and is a summary of the conversation information between the user U who uses the target apparatus D and the operator Op. In this case, the second information is, for example, a memo in which the conversation with the user U is written in a sentence by the operator Op. The second information includes, for example, only a summary of the inquiry from the user U.

Alternatively, the second information is, for example, the conversation information between the user U and the operator Op. For example, the second information, which is the conversation information, may be audio information indicating the conversation between the user U and the operator or sentence information in which the audio information is written in a sentence. The sentence information is generated using, for example, a well-known technology of transcribing the audio information into a sentence.

Alternatively, the second information may be, for example, information registered in the system via the user terminal 18 operated by the user U who uses the target apparatus D. **In** this case, the second information may be, for example, sentence information indicating a chat conversation between the user U and the operator Op (or a chatbot). Alternatively, the second information may be, for example, sentence information input by the user U on an inquiry screen provided by the system (for example, the information processing apparatus 14) by operating the user terminal 18.

The processing unit 126 acquires the answer information for the failure output from the answer model by inputting the second information acquired by the reception unit 124 into the answer model stored in the answer model storage unit 122.

The answer information is measure information indicating a measure for the target apparatus with respect to the inquiry related to the failure in the target apparatus. The answer model of the present exemplary embodiment has the diagnostic function related to the failure in the target apparatus. Thus, for example, the answer information is information in which a specific countermeasure is expressed in a sentence (for example, "Please replace component ZZ"). Alternatively, for example, the answer information may be information including only identification information (for example, the component number) of a component that causes the failure.

The processing unit 126 acquires converted answer information by converting information for the first region included in the answer information output from the answer model into information for the second region.

### (Conversion of Answer Information Based on Language of Inquiry)

For example, the processing unit 126 converts the information for the first region included in the answer information into the information for the second region based on a language of the second information. In this case, first, the processing unit 126 specifies the second region based on the language of the second information. Next, the processing unit 126 converts the information for the first region included in the measure information output from the answer model into the information for the second region with reference to correspondence information in which the measure information in the first region is associated with the measure information in the second region.

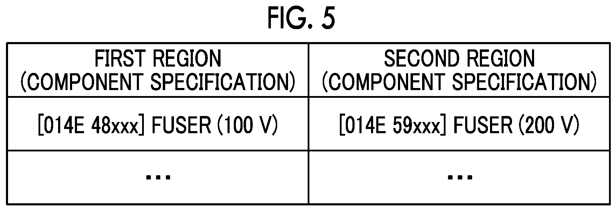

FIG. 5 is a diagram illustrating an example of the correspondence information. In FIG. 5, specifications of a replacement target component are illustrated as an example of the measure information. As illustrated in FIG. 5, in the correspondence information of the present exemplary embodiment, a component specification that is an example of the measure information in the first region is associated with a component specification that is an example of the measure information in the second region.

For example, the component specification of the target apparatus for the first region is "[014E 48xxx] Fuser (100 V)", and the component specification of the target apparatus for the second region is "[014E 59xxx] Fuser (200 V)". The first region and the second region have different conditions for using the target apparatus (for example, a voltage, a frequency, regulations, or safety standards) and thus, may have different component specifications or the like.

Thus, the processing unit 126 converts the information for the first region, which is "[014E 48xxx] Fuser (100 V)", included in the measure information output from the answer model into the information for the second region, which is "[014E 59xxx] Fuser (200 V)" with reference to the correspondence information illustrated in FIG. 5. The processing unit 126 may not only simply convert the information for the first region into the information for the second region but also perform other types of processing such as appropriately correcting the information.

### (Conversion of Answer Information Based on Positional Information of Target Apparatus)

Alternatively, for example, the processing unit 126 converts the information for the first region included in the answer information into the information for the second region based on positional information of the target apparatus. In this case, first, the processing unit 126 specifies the second region based on the positional information of the target apparatus. The processing unit 126 converts the information for the first region included in the measure information output from the answer model into the information for the second region with reference to the correspondence information in which the measure information in the first region and the measure information in the second region are associated with each other. For example, the processing unit 126 converts the information for the first region included in the measure information output from the answer model into the information for the second region with reference to the correspondence information illustrated in FIG. 5.

The processing unit 126 acquires the positional information of the target apparatus based on an **IP** address of the user terminal 18 operated by the user U or on registration information of the user U (for example, includes a location of the target apparatus). The registration information of the user U is associated with, for example, an ID of the user U or an ID of the target apparatus D mentioned in the conversation information between the operator Op and the user U. Thus, the registration information of the user U can be specified based on information in the conversation information. In a case where the positional information of the target apparatus can be acquired, more detailed specifying of the region than the above specifying of the second region using the language can be performed.

In a case where the second region is specified using the language of the second information, for example, a relatively wide region (for example, one region in the European region) may be specified as the second region. However, there may be an exception to the measure for each small region in the second region. For example, depending on the region, a measure complying with environmental regulations may be necessary for replacing the component, or a high-humidity countermeasure product may be necessary as the replacement target component.

A measure corresponding to a contract for each user who is a customer may also be necessary. For example, a constraint condition for replacing the component (for example, permission to work for each component, a replacement cycle of the component, a temporary countermeasure product when an issue occurs, and additional processing specific to the region) may be different depending on the user. Maintenance and management rules may also be different for each target region. For example, a rule indicating that, in replacing the component causing the failure, an assembly incorporating the component is replaced may be set for a certain user or a certain region, and a rule indicating that, in replacing the component causing the failure, only the component is replaced may be set for a different user or a different region. A customer engineer who is a person in charge of maintenance performs a maintenance operation for a plurality of regions. Thus, maintenance of the target apparatus in which circumstances of the regions are taken into consideration is required.

Therefore, in the present exemplary embodiment, the measure information in the second region in the correspondence information includes constraint information related to the measure in the second region.

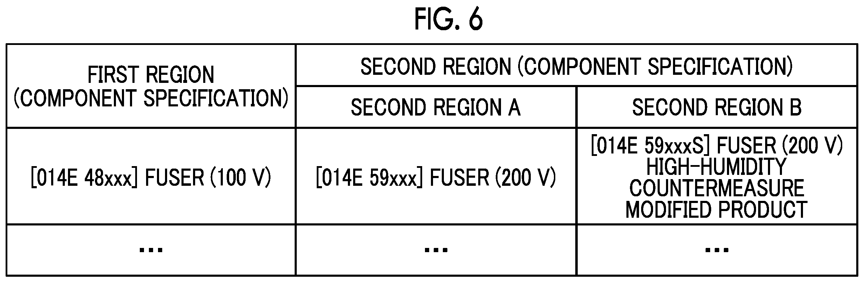

FIG. 6 is a diagram for describing the constraint information. As illustrated in FIG. 6, a case where a small region (for example, a second region B) in the second region is specified in accordance with the positional information of the target apparatus is considered. In this case, a second region A that is a partial region in the second region and the second region B in the second region may have different measures for the target apparatus. Specifically, as illustrated in FIG. 6, the second region B has a constraint indicating that the component needs to be replaced with a "high-humidity countermeasure modified product".

Thus, in a case where the second region B that is a small region in the second region is specified in accordance with the positional information of the target apparatus, the processing unit 126 converts the information for the first region (for example, [014E 48xxx] Fuser (100 V)) included in the measure information output from the answer model into the information for the second region B (for example, [014E 59xxxS] Fuser (200 V) High-Humidity Countermeasure Modified Product) with reference to the correspondence information as illustrated in FIG. 6.

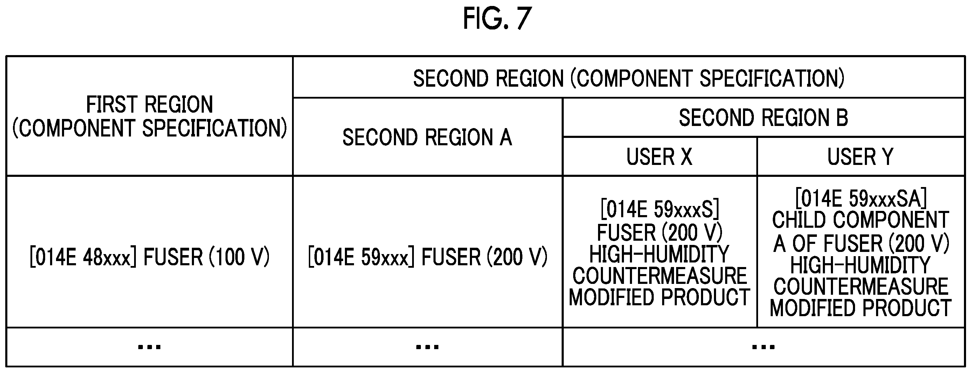

FIG. 7 is a diagram for describing the constraint information for each user. As illustrated in FIG. 7, a case where the positional information of the target apparatus is specified as the second region B based on the registration information of the user U (for example, includes the location of the target apparatus) is considered. In this case, the processing unit 126 converts the information for the first region (for example, [014E 48xxx] Fuser (100 V)) included in the measure information output from the answer model into information for a user Y in the second region B (for example, [014E 59xxxSA] Child Component A of Fuser (200V) High-Humidity Countermeasure Modified Product) with reference to the correspondence information as illustrated in FIG. 7 based on the registration information of the user (for example, contract information of a maintenance service). In this case, only the child component P is the replacement target component.

The output unit 128 outputs the converted answer information acquired by the processing unit 126 as a result.

The converted answer information output from the output unit 128 is displayed on, for example, the display unit 12F of the operator terminal 12. In this case, the operator Op transmits the measure indicated by the converted answer information to the user U. Alternatively, the converted answer information output from the output unit 128 is output to a terminal different from the operator terminal 12. For example, in a case where the conversation is performed through a chat, the converted answer information may be displayed on the display unit 18F of the user terminal 18 operated by the user U. Alternatively, for example, the converted answer information may be displayed on a terminal (not illustrated) operated by the customer engineer or the like. In this case, the customer engineer checks the converted answer information and performs repair or the like of the target apparatus D with the replacement target component or the like.

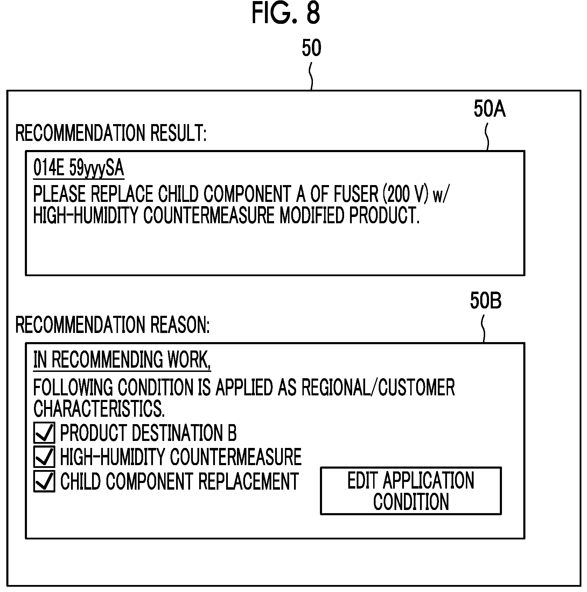

The output unit 128 may output the converted answer information, the constraint information, and reason information indicating a reason for setting the constraint information. FIG. 8 is a screen example including the converted answer information, the constraint information, and the reason information. For example, the output unit 128 may display a screen as illustrated in FIG. 8 on the terminal (not illustrated) operated by the customer engineer or the like.

As illustrated in FIG. 8, a recommendation result 50A includes the converted answer information and the constraint information (for example, "Child Component A w/ High-Humidity Countermeasure Modified Product"). A recommendation reason 50B includes the reason information (for example, "Following condition is applied as regional/customer characteristics: Product Destination B, High-Humidity Countermeasure, Child Component Replacement").

For example, the customer engineer who is the person in charge of maintenance visits the user U who uses the target apparatus D, with reference to the recommendation result 50A illustrated in FIG. 8. By displaying information as illustrated in FIG. 8 on the terminal (not illustrated) operated by the customer engineer or the like, the customer engineer can check an application condition corresponding to the regional characteristics and the customer characteristics and can check whether or not the target component is switched and a reason for switching. In a case where the information illustrated in FIG. 8 is outdated, the customer engineer can edit the information (for example, add or delete conditions) by manually operating "Edit Application Condition" in FIG. 8.

Next, specific processing performed by the answer system 10 according to the present exemplary embodiment configured as described above will be described.

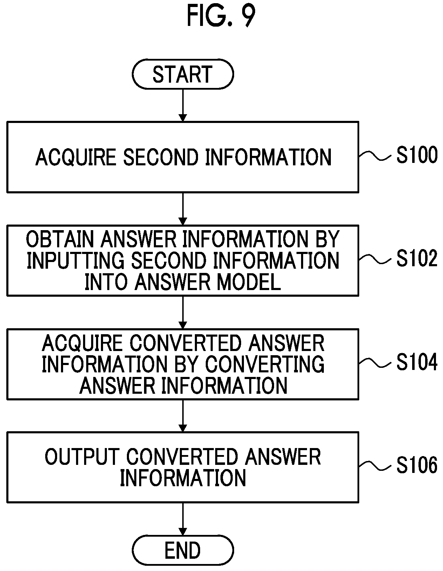

First, in the information processing apparatus 14, the information processing illustrated in FIG. 9 is performed by causing the CPU 14A to read an information processing program from the ROM 14B or the storage 14D, load the information processing program into the RAM 14C, and execute the information processing program.

In step S100, the CPU 14A acquires the second information that indicates the inquiry related to the failure in the target apparatus D and is obtained in the second region.

In step S102, the CPU 14A acquires the answer information for the failure output from the answer model by inputting the second information acquired in step S100 into the answer model stored in the answer model storage unit 122.

In step S104, the CPU 14A acquires the converted answer information by converting the information for the first region included in the answer information output from the answer model in step S102 into the information for the second region.

In step S106, the CPU 14A outputs the converted answer information acquired in step S104 as a result.

While the exemplary embodiment of the present invention is described above, the exemplary embodiment of the present invention is not limited to the exemplary embodiment and may be subjected to various modifications and implementations without changing the gist of the present invention. For example, while the exemplary embodiment illustratively describes a case where the information processing apparatus 14 generates the answer information for the first information, the present invention is not limited to the exemplary embodiment. For example, the operator terminal 12, the user terminal 18, or the terminal (not illustrated) operated by the customer engineer may generate the answer information for the first information. Alternatively, for example, the target apparatus D may generate the answer information for the first information.

The information related to the target apparatus (for example, specifications, standards, or operation information of the target apparatus) may be inputtable into the answer model. In this case, the answer model is, for example, a machine learning model trained in advance based on the learning information in which the information about the failure in the target apparatus in the past, the information related to the target apparatus (for example, the specifications, the standards, or the operation information of the target apparatus), and the information about the countermeasure for the failure are associated with each other. In this case, in a case where the information related to the target apparatus and the second information are input into the answer model, the answer information is output from the answer model. By taking the information related to the target apparatus into consideration, higher-accuracy answer information may be obtained.

A part of the constituents of the exemplary embodiments may be removed or changed without changing the gist of the present invention. Steps in the flow of the exemplary embodiment can be, for example, added, deleted, changed, or switched without changing the gist of the present invention.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.
(((1))) An information processing system comprising:
   a processor configured to:
   in using an answer model trained based on first information obtained in a first region,
   acquire second information that indicates an inquiry related to a failure in a target apparatus and is obtained in a second region;
   acquire answer information output from the answer model by inputting the second information into the answer model;
   acquire converted answer information by converting information for the first region included in the answer information into information for the second region; and
   output the converted answer information.
(((2))) The information processing system according to (((1))), wherein the processor is configured to:
   convert the information for the first region included in the answer information into the information for the second region based on a language of the second information.
(((3))) The information processing system according to (((2))),
   wherein the answer information is measure information indicating a measure for the target apparatus with respect to the inquiry related to the failure in the target apparatus, and
   the processor is configured to:
      specify the second region based on the language of the second information; and
      convert the information for the first region included in the measure information output from the answer model into the information for the second region with reference to correspondence information in which the measure information in the first region and the measure information in the second region are associated with each other.
(((4))) The information processing system according to (((1))), wherein the processor is configured to:
   convert the information for the first region included in the answer information into the information for the second region based on positional information of the target apparatus.
(((5))) The information processing system according to (((4))),
   wherein the answer information is measure information indicating a measure for the target apparatus with respect to the inquiry related to the failure in the target apparatus, and
   the processor is configured to:
      specify the second region based on the positional information of the target apparatus; and
      convert the information for the first region included in the measure information output from the answer model into the information for the second region with reference to correspondence information in which the measure information in the first region and the measure information in the second region are associated with each other.
(((6))) The information processing system according to (((5))),
   wherein the measure information in the second region in the correspondence information includes constraint information related to the measure in the second region.
(((7))) The information processing system according to (((6))), wherein the processor is configured to:
   output the answer information, the constraint information, and reason information indicating a reason for setting the constraint information.
(((8))) An information processing program causing a computer to execute a process comprising:
   in using an answer model trained based on first information obtained in a first region,
   acquiring second information that indicates an inquiry related to a failure in a target apparatus and is obtained in a second region;
   acquiring answer information output from the answer model by inputting the second information into the answer model;
   acquiring converted answer information by converting information for the first region included in the answer information into information for the second region; and
   outputting the converted answer information.

According to (((1))) or (((8))), in using the model that outputs the answer to the inquiry related to the failure in the target apparatus, an answer to an inquiry received in a certain region can be obtained even in a case where the model is trained based on information obtained in another region.

According to (((2))), which region is the second region can be specified based on the language of the second information, and the answer information for the second region can be obtained based on a result of specifying the second region.

According to (((3))), which region is the second region can be specified based on the language of the second information, and the answer information for the second region can be obtained based on the result of specifying the second region and on the correspondence information prepared in advance.

According to (((4))), which region is the second region can be specified based on the positional information of the target apparatus, and the answer information for the second region can be obtained based on the result of specifying the second region.

According to (((5))), which region is the second region can be specified based on the positional information of the target apparatus, and the answer information for the second region can be obtained based on the result of specifying the second region and on the correspondence information prepared in advance.

According to (((6))), the answer information including a constraint related to the measure in the second region can be obtained.

According to (((7))), the constraint related to the measure in the second region and a reason for the constraint are obtained. Accordingly, a user of the system can check a reason for switching the measure.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: answer system
12: operator terminal
12A, 14A, 18A: CPU
12B, 14B, 18B: ROM
12C, 14C, 18C: RAM
12D, 14D, 18D: storage
12E, 14E, 18E: operation unit
12F, 14F, 18F: display unit
12G, 14G, 18G: communication line I/F unit
12I, 14I, 18I: system bus
14: information processing apparatus
16: communication line
18: user terminal
120: information storage unit
122: answer model storage unit
124: reception unit
126: processing unit
128: output unit

## Claims

1. An information processing system comprising:
a processor configured to:
in using an answer model trained based on first information obtained in a first region,
acquire second information that indicates an inquiry related to a failure in a target apparatus and is obtained in a second region;
acquire answer information output from the answer model by inputting the second information into the answer model;
acquire converted answer information by converting information for the first region included in the answer information into information for the second region; and
output the converted answer information.

2. The information processing system according to claim 1, wherein the processor is configured to:
convert the information for the first region included in the answer information into the information for the second region based on a language of the second information.

3. The information processing system according to claim 2,
wherein the answer information is measure information indicating a measure for the target apparatus with respect to the inquiry related to the failure in the target apparatus, and
the processor is configured to:
specify the second region based on the language of the second information; and
convert the information for the first region included in the measure information output from the answer model into the information for the second region with reference to correspondence information in which the measure information in the first region and the measure information in the second region are associated with each other.

4. The information processing system according to claim 1, wherein the processor is configured to:
convert the information for the first region included in the answer information into the information for the second region based on positional information of the target apparatus.

5. The information processing system according to claim 4,
wherein the answer information is measure information indicating a measure for the target apparatus with respect to the inquiry related to the failure in the target apparatus, and
the processor is configured to:
specify the second region based on the positional information of the target apparatus; and
convert the information for the first region included in the measure information output from the answer model into the information for the second region with reference to correspondence information in which the measure information in the first region and the measure information in the second region are associated with each other.

6. The information processing system according to claim 5,
wherein the measure information in the second region in the correspondence information includes constraint information related to the measure in the second region.

7. The information processing system according to claim 6, wherein the processor is configured to:
output the answer information, the constraint information, and reason information indicating a reason for setting the constraint information.

8. An information processing program causing a computer to execute a process comprising:
in using an answer model trained based on first information obtained in a first region,
acquiring second information that indicates an inquiry related to a failure in a target apparatus and is obtained in a second region;
acquiring answer information output from the answer model by inputting the second information into the answer model;
acquiring converted answer information by converting information for the first region included in the answer information into information for the second region; and
outputting the converted answer information.

9. An information processing method comprising:
in using an answer model trained based on first information obtained in a first region,
acquiring second information that indicates an inquiry related to a failure in a target apparatus and is obtained in a second region;
acquiring answer information output from the answer model by inputting the second information into the answer model;
acquiring converted answer information by converting information for the first region included in the answer information into information for the second region; and
outputting the converted answer information.

## Amended claims

### Amended claims in accordance with Rule 137(2) EPC.

1. An information processing system (14) comprising:
a processor (14A) configured to:
in using an answer model trained based on first information obtained in a first region,
acquire second information that indicates an inquiry related to a failure in a target apparatus (D) and is obtained in a second region;
acquire answer information, with respect to the first region, output from the answer model by inputting the second information into the answer model;
acquire converted answer information, with respect to the second region, by converting regional information for the first region included in the answer information into regional information for the second region; and
output the converted answer information.

2. The information processing system (14) according to claim 1, wherein the processor (14A) is configured to:
convert the regional information for the first region included in the answer information into the regional information for the second region based on a language of the second information obtained in the second region.

3. The information processing system (14) according to claim 2,
wherein the answer information is measure information indicating a measure for the target apparatus (D) with respect to the inquiry related to the failure in the target apparatus (D), and
the processor (14A) is configured to:
specify the second region based on the language of the second information; and
convert the regional information for the first region included in the measure information output from the answer model into the regional information for the second region with reference to correspondence information in which the measure information in the first region and the measure information in the second region are associated with each other.

4. The information processing system (14) according to claim 1, wherein the processor (14A) is configured to:
convert the regional information for the first region included in the answer information into the regional information for the second region based on a location of the target apparatus (D).

5. The information processing system (14) according to claim 4,
wherein the answer information is measure information indicating a measure for the target apparatus (D) with respect to the inquiry related to the failure in the target apparatus (D), and
the processor (14A) is configured to:
specify the second region based on the location of the target apparatus (D); and
convert the regional information for the first region included in the measure information output from the answer model into the regional information for the second region with reference to correspondence information in which the measure information in the first region and the measure information in the second region are associated with each other.

6. The information processing system (14) according to claim 5,
wherein the measure information in the second region in the correspondence information includes constraint information related to the measure in the second region.

7. The information processing system (14) according to claim 6, wherein the processor (14A) is configured to:
output the answer information, the constraint information, and reason information indicating a reason for setting the constraint information.

8. An information processing program causing a computer (14) to execute a process comprising:
in using an answer model trained based on first information obtained in a first region,
acquiring second information that indicates an inquiry related to a failure in a target apparatus (D) and is obtained in a second region;
acquiring answer information, with respect to the first region, output from the answer model by inputting the second information into the answer model;
acquiring converted answer information, with respect to the second region, by converting regional information for the first region included in the answer information into regional information for the second region; and
outputting the converted answer information.

9. An information processing method comprising:
in using an answer model trained based on first information obtained in a first region,
acquiring second information that indicates an inquiry related to a failure in a target apparatus (D) and is obtained in a second region;
acquiring answer information, with respect to the first region, output from the answer model by inputting the second information into the answer model;
acquiring converted answer information, with respect to the first region, by converting regional information for the first region included in the answer information into regional information for the second region; and
outputting the converted answer information.
